# EUROPÄISCHE PATENTSCHRIFT

(11) **EP 2 952 419 B1**
(45) Veröffentlichungstag und Bekanntmachung des Hinweises auf die Patenterteilung: **23.10.2019**
(21) Anmeldenummer: 15001287.0
(22) Anmeldetag: 30.04.2015
(51) Int. Cl.: B62D 33/06, B60G 17/08

(54) **FEDER-DÄMPFERELEMENT FÜR DIE KABINENFEDERUNG VON FAHRZEUGEN**
SPRING DAMPER ELEMENT FOR THE SUSPENSION OF VEHICLE CABS
ÉLÉMENT RESSORT AMORTISSEUR POUR LA SUSPENSION DE CABINE DE VÉHICULES

(30) Priorität: 22.05.2014 DE 102014007641
(43) Veröffentlichungstag der Anmeldung: 09.12.2015
(73) Patentinhaber: HYDAC Systems & Services GmbH, 66280 Sulzbach (DE)
(72) Erfinder: Scholl, Josef, 66636 Tholey (DE); Huth, Heinz-Peter, 66802 Überherrn (DE); Anton, Marc, 66333 Völklingen (DE); Mohrbacher, Markus, 66606 St. Wendel (DE); Kiefer, Timo, 66740 Saarlouis (DE)
(74) Vertreter: Bartels und Partner, Patentanwälte

(56) Entgegenhaltungen:
- EP-A1- 1 757 471
- WO-A1-93/17254
- DE-A1- 3 933 624
- DE-A1-102007 038 933

## Beschreibung

Die Erfindung betrifft ein Federelement, insbesondere Feder-Dämpfer-Element für die Kabinenfederung von Fahrzeugen, wie mobilen Arbeitsmaschinen, mit den Merkmalen im Oberbegriff von Anspruch 1.

Federelemente dieser Art sind Stand der Technik. Derartige Federelemente mit doppelt wirkenden Federungszylindern kommen bevorzugt bei Kabinenfederungen von Fahrzeugen zum Einsatz, die für einen Betrieb auf rauem unbefestigtem Untergrund geeignet sind, wie dies bei landwirtschaftlichen oder forstwirtschaftlichen Fahrzeugen, Baumaschinen oder anderen Sonderfahrzeugen der Fall ist. Um das Kabinenpersonal gegen im Betrieb auftretende Stoßbelastungen zu schützen, sind Kabinen solcher Fahrzeuge üblicherweise über doppelt wirkende Federungszylinder gegenüber dem Fahrgestell abgestützt. Bei den bekannten Federelementen ist zur Bildung einer Fluidverbindung zwischen den Arbeitsräumen eine Verrohrung vorgesehen, üblicherweise in Form einer Rohrleitung, die sich entlang der Außenseite des Federungszylinders zwischen dessen Bodenteil, an dem sich die Anlenkstelle für die Verbindung mit dem Fahrgestell befindet, und dem Kopfteil des Federungszylinders erstreckt, aus dem die Kolbenstange herausgeführt ist und an deren Ende sich die Anlenkstelle für die Verbindung mit einem Kabinenteil befindet. Die durch die Rohrleitung gebildete externe Verbindung ist insofern nachteilig, als sie zur Sperrigkeit der Gesamt-Baueinheit des Federelements beiträgt, was bei dem beschränkten Einbauraum, wie er in der Regel bei den in Frage kommenden mobilen Arbeitsgeräten zur Verfügung steht, den Einbau kompliziert und erschwert. In Anbetracht der rauen Betriebsbedingungen, unter denen die Fahrzeuge mit gefederter Kabine betrieben werden, stellt eine außenseitige Verrohrung wegen der Gefahr der Beschädigung durch Einwirkung äußerer, mechanischer Kräfte ein Sicherheitsrisiko dar.

Die WO 93/17254 A1 beschreibt ein gattungsgemäßes Federelement, mit einem Federungszylinder, an dessen einem Ende ein Bodenteil, das eine Lagerstelle bildet, vorgesehen ist und in dem ein Federungskolben, dessen Kolbenstange aus dem dem Bodenteil entgegengesetzten Kopfteil des Federungszylinders herausgeführt ist, Arbeitsräume für ein Druckfluid, wie Hydrauliköl, voneinander trennt, wobei die Arbeitsräume über eine Verbindungsleitung miteinander in Fluidverbindung sind, wobei der Federungszylinder zumindest teilweise von einem koaxialen Rohrkörper umgeben ist, dessen Innendurchmesser größer ist als der Außendurchmesser des Federungszylinders, so dass zwischen diesem und dem Rohrkörper ein Außenraum gebildet ist, der zumindest einen Abschnitt der Verbindungsleitung bildet.

Weitere Dämpfersysteme gehen aus der DE 10 2007 038 933 A1, der EP 1 757 471 A1 und der DE 39 33 624 A1 hervor.

Ausgehend von diesem Stand der Technik stellt sich die Erfindung die Aufgabe, ein Federelement der genannten Gattung zur Verfügung zu stellen, das sich durch eine besonders kompakte und betriebssichere Bauweise auszeichnet.

Erfindungsgemäß ist diese Aufgabe durch ein Federelement gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass in die Verbindungsleitung ein eine veränderliche Drosselstelle bildendes, steuerbares Dämpfungsventil eingefügt ist, dass das Bodenteil mit einem seitlichen Ansatz einen Ventilblock für das Dämpfungsventil bildet und dass der Druckspeicher unmittelbar an den Ventilblock unter Bildung einer internen Verbindung zum Dämpfungsventil angeschlossen ist.

Diese Ausführungsform der Erfindung, bei der in die Verbindungsleitung ein eine veränderliche Drosselstelle bildendes, steuerbares Dämpfungsventil eingefügt ist, lässt sich mit besonderem Vorteil als Feder-Dämpfer-Element bei adaptiven Federungssystemen einsetzen. Bei Anbindung des steuerbaren Dämpfungsventils an die bei den betreffenden Fahrzeugen vorhandene Fahrzeugsteuerung, die signalerzeugende Komponenten, wie einen Beschleunigungssensor und einen Winkelsensor, enthält, lässt sich das Dämpfungsverhalten an die jeweiligen Betriebsbedingungen derart anpassen, dass für Kabine und Bediener eine verringerte Schwingungsbelastung und eine Steigerung des Fahrkomforts erreicht sind.

Es ist ferner vorgesehen, dass der Federungszylinder zumindest teilweise von einem koaxialen Rohrkörper umgeben ist, dessen Innendurchmesser größer ist als der Außendurchmesser des Federungszylinders, so dass zwischen diesem und dem Rohrkörper ein Außenraum gebildet ist, der zumindest einen Abschnitt der Verbindungsleitung bildet. Bei derart ausgebildeter, innerer Fluidführung verringert sich der Bedarf an freiliegend zu führenden Rohrleitungen, so dass die Gefahr einer Gefährdung der Betriebssicherheit durch äußere Einwirkungen auf eine äußere Verrohrung verringert ist.

Bei besonders vorteilhaften Ausführungsbeispielen ist die Anordnung so getroffen, dass der Rohrkörper den Federungszylinder in Form eines Außenzylinders derart umgibt, dass ein sich über die Länge des Federungszylinders erstreckender Ringraum als Abschnitt der Verbindungsleitung gebildet ist.

Dadurch lässt sich eine in das Federelement vollständig integrierte Fluidverbindung realisieren. Durch den an der Außenseite des Federungszylinders gebildeten, durchgehenden Ringraum lassen sich im Vergleich zu einer externen Verrohrung auch ein größerer Leitungsquerschnitt sowie eine besonders kompakte Bauweise realisieren, die den Einsatz auch bei beengten Einbauverhältnissen erleichtert.

Bei besonders vorteilhaften Ausführungsbeispielen mündet der einen innenseitigen Abschnitt der Verbindungsleitung bildende Ringraum an dem kopfseitigen Ende des Federungszylinders in den stangenseitigen Arbeitsraum ein und ist an seinem am Bodenteil gelegenen Ende mit dem Dämpfungsventil in Verbindung. Bei vom Bodenteil ausgehendem kolbenseitigem Arbeitsraum kann dieser ebenfalls mit seinem am Bodenteil befindlichen Ende mit dem Dämpfungsventil in Verbindung sein. Dadurch lässt sich das Dämpfungsventil am Bodenteil unmittelbar ohne externe Verrohrung anbringen.

In vorteilhafter Weise kann mindestens ein mit den Arbeitsräumen in Verbindung stehender oder in Verbindung bringbarer, hydropneumatischer Druckspeicher vorgesehen sein, so dass sich die Steifigkeit der Dämpfung in gewünschter Weise durch die Dimensionierung des Speichers beeinflussen lässt..

Die mit den Arbeitsräumen in Verbindung stehende Ölseite des jeweiligen Druckspeichers kann mit dem Hydrauliksystem des betreffenden, zugehörigen Fahrzeugs verbindbar sein. Durch Einspeisung eines entsprechenden Systemdrucks lässt sich über das Federelement eine lastabhängige Niveauregelung realisieren. Auch kann das Federelement Bestandteil eines Wankstabilisiersystems bilden.

Als Dämpfungsventil kann ein proportionales 3/2-Wegeventil vorgesehen sein. Ferner kann, als Sicherheitseinrichtung gegen eine mögliche Kavitation bei gegebenenfalls in einem Arbeitsraum auftretendem Minderdruck zwischen Ölseite des jeweiligen Druckspeichers und dem stangenseitigen und dem kolbenseitigen Arbeitsraum je eine das Dämpfungsventil umgehende Leitung vorgesehen sein, die jede ein Rückschlagventil enthalten, die in Richtung auf den jeweiligen Arbeitsraum öffnen. Dadurch ist sichergestellt, dass unabhängig vom Steuerzustand des Dämpfungsventils das Druckniveau der Arbeitsräume demjenigen des Druckspeichers entspricht.

In vorteilhafter Weise kann ein die Axialposition der Kolbenstange im Federungszylinder erkennendes Weg-Mess-System vorgesehen sein. Ein derartiges System, das berührungslos arbeitet, kann dem Stand der Technik entsprechen und beispielsweise nach einem magnetostriktiven Verfahren arbeiten, um den jeweiligen Betriebszustand des Federelements bezeichnende Signale der Fahrzeugsteuerung zu liefern, beispielsweise für eine lastabhängige Niveauregelung.

Nachstehend ist die Erfindung anhand eines in der Zeichnung dargestellten Ausführungsbeispiels im Einzelnen erläutert. Es zeigen:

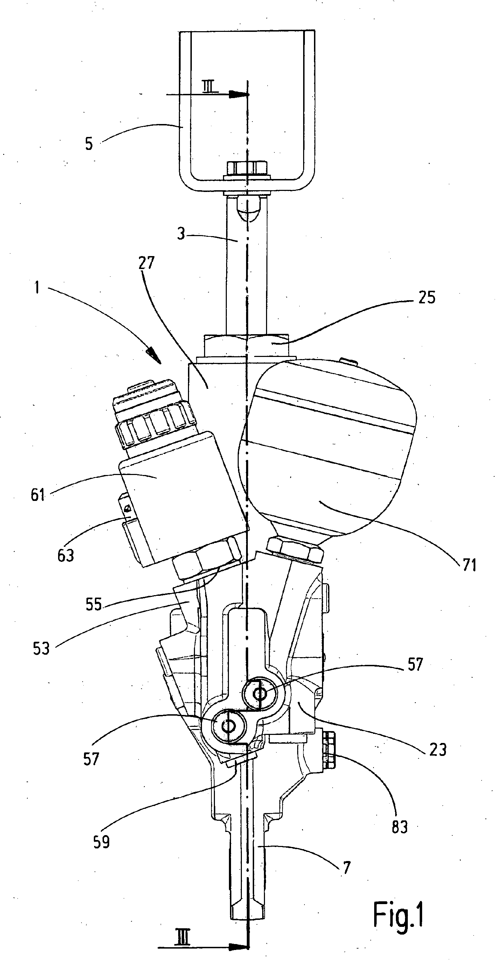

- Fig. 1: eine perspektivische Schrägansicht eines Ausführungsbeispiels des erfindungsgemäßen Federelements;
- Fig. 2: einen gegenüber Fig. 1 in größerem Maßstab und abgebrochen gezeichneten Längsschnitt des Bereichs zwischen Bodenteil und Endbereich des Federungszylinders des Ausführungsbeispiels mit in Symboldarstellung gezeigter Fluidschaltung; und
- Fig. 3: einen Längsschnitt des Ausführungsbeispiels mit unterschiedlichen Schnittebenen, wie in Fig. 1 mit Schnittlinie III-III angegeben.

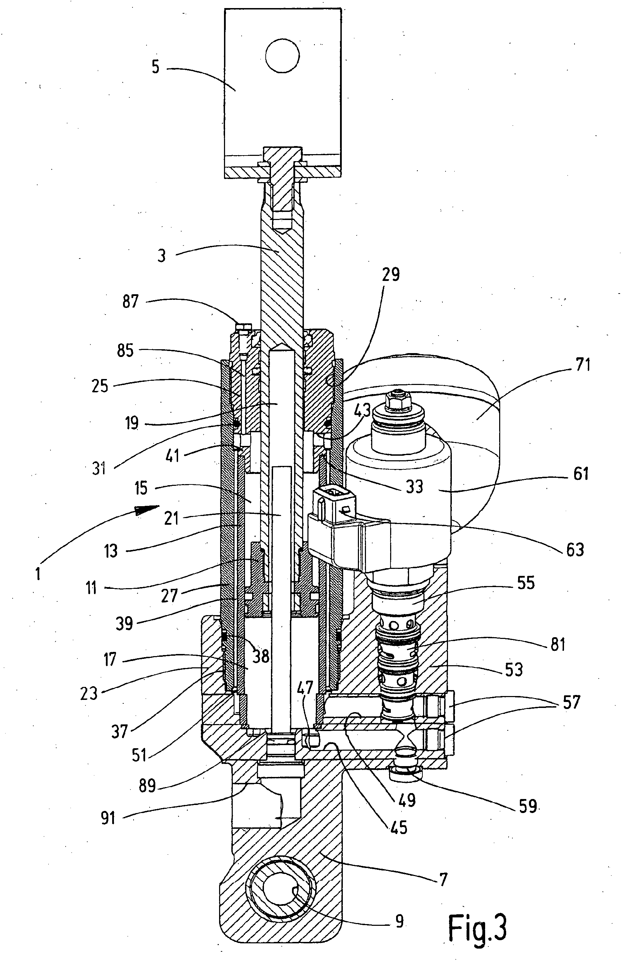

Das in der Zeichnung dargestellte Ausführungsbeispiel ist als adaptives Feder-Dämpfer-Element für den Einsatz bei einer Kabinenfederung vorgesehen. Das als Ganzes mit 1 bezeichnete Federelement weist, wie bei derartigen Federelementen üblich, eine Kolbenstange 3 auf, die als bewegbares Abstützelement über ein Verbindungsteil 5 mit der Struktur einer Fahrerkabine (nicht gezeigt) verbindbar ist. An dem der Kolbenstange 3 entgegengesetztem Ende ist ein Anbringteil 7 vorgesehen, an dem zur Bildung einer Lagerung am Fahrgestell eines betreffenden Fahrzeugs (nicht dargestellt) eine Anlenkstelle 9, siehe Fig. 3, gebildet ist. Ein am inneren Ende der Kolbenstange 3 befindlicher Federungskolben 11, der in einem Federungszylinder 13 längsverschiebbar ist, trennt in diesem einen stangenseitigen Arbeitsraum 15 von einem kolbenseitigen Arbeitsraum 17, in denen sich ein Druckfluid, im vorliegenden Fall Hydrauliköl, befindet. In einem an das innere, am Kolben 11 befindliche Ende angrenzenden Längenabschnitt ist die Kolbenstange 3 als Hohlrohr ausgebildet, so dass ein sich koaxial erstreckender Hohlraum 19 für ein Weg-Mess-System 21 gebildet ist, worauf später noch eingegangen wird.

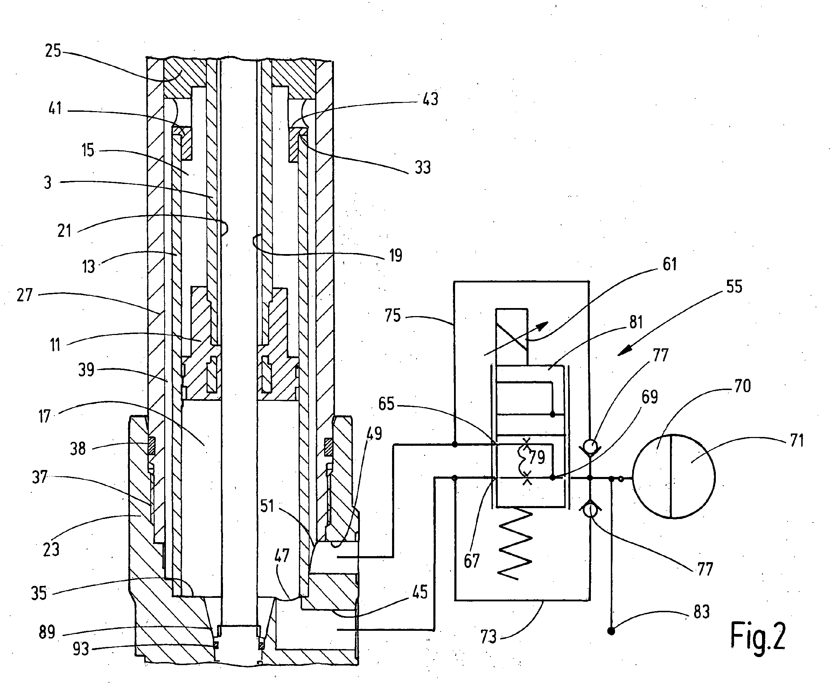

Der die Führung für den Kolben 11 bildende Federungszylinder 13 erstreckt sich entlang des für den Kolben 11 vorgesehenen Federwegs zwischen einem in der Zeichnung untenliegenden Bodenteil 23 und einem oberen Abschlussteil 25. Vom Bodenteil 23 ausgehend, ist der Federungszylinder 13 koaxial von einem Rohrkörper 27 umgeben, der sich über das obere Ende des Federungszylinders 13 hinaus erstreckt und im Endabschnitt ein Innengewinde 29 (Fig. 3) aufweist, in das das Abschlussteil 25 eingeschraubt ist, wobei ein O-Ring 31 eine Abdichtung am Rohrkörper 27 bildet. Das Abschlussteil 25 bildet an seinem inneren Endbereich eine Abstützung 33 für den Federungszylinder 13, um diesen an einer inneren Bodenfläche 35 (s. Fig. 2) des Bodenteils 23 festzulegen. Das dem Bodenteil 23 zugeordnete Ende des Rohrkörpers 27 weist ein Außengewinde 37 auf, mit dem es mit dem Bodenteil 23 verschraubt ist, wobei ein O-Ring 38 die Abdichtung am Bodenteil 23 bildet.

Der Außendurchmesser des Federungszylinders 13 ist geringer als der Innendurchmesser des einen koaxialen Außenzylinder bildenden Rohrkörpers 27, so dass ein sich entlang der Außenseite des Federungszylinders 13 erstreckender Ringraum 39 gebildet ist. Das am oberen Ende des Federungszylinders 13 befindliche Abschlussteil 25 weist ein nach innen vorstehendes Hülsenteil 41 auf, das die Abstützung 33 am Federungszylinder 13 bildet und die Kolbenstange 3 in einem Abstand umgibt. Außerdem weist das Hülsenteil 41 radiale Durchbrüche 43 auf, über die eine Fluidverbindung zwischen dem oberen Ende des Ringraums 39 und dem stangenseitigen Arbeitsraum 15 gebildet ist.

Das Bodenteil 23 weist, s. Fig. 2 und 3, unterhalb der Bodenfläche 35 einen Querkanal 45 auf, der über Durchgänge 47 in der Bodenfläche 35 mit dem kolbenseitigen Arbeitsraum 17 in Verbindung ist. Ein sich oberhalb des Querkanals 45 parallel zu diesem erstreckender Querkanal 49 ist mit dem unteren Ende 51 des Ringraums 39 in Fluidverbindung. Wie am deutlichsten aus Fig. 3 zu ersehen ist, weist das Bodenteil 23 einen seitlichen Ansatz 53 auf, der den Ventilblock für ein Dämpfungsventil 55 bildet. Im Betrieb stellt dieses zwischen den Querkanälen 45 und 47, die durch Verschlussschrauben 57 und eine Ablassschraube 59 nach außen hin geschlossen sind, eine Fluidverbindung her, die, je nach Ventilstellung des Dämpfungsventils 55, mehr oder weniger stark gedrosselt ist. Der Ringraum 39 bildet daher eine interne Verbindungsleitung für die Fluidverbindung zwischen den Arbeitsräumen 15 und 17.

Die Fig. 2 zeigt die Schaltung des Dämpfungsventils 55 für die Fluidverbindung zwischen den Querkanälen 45und 49. Das Dämpfungsventil 55 ist ein proportionales 3/2-Wegeventil, das elektromagnetisch mittels einer Magnetspule 61 betätigbar ist, die über eine Steckereinrichtung 63 erregbar ist. Das Dämpfungsventil 55 ist mit seinen Anschlüssen 65 und 67 mit dem Querkanal 49 bzw. 45 in Verbindung, und der dritte Anschluss 69 ist mit der Ölseite 70 eines hydropneumatischen Druckspeichers 71 in Verbindung. Die Ölseite 70 ist ferner über Umgehungsleitungen 73 und 75, die das Dämpfungsventil 55 überbrücken, mit dem Querkanal 45 bzw. dem Querkanal 49 in Verbindung, wobei in jede Umgehungsleitung 73, 75 ein Rückschlagventil 77 eingefügt ist, die jedes in Richtung auf den Querkanal 45 bzw. 49 druckbetätigt öffnen. Das Dämpfungsventil 55 weist innerhalb des durch den Ansatz 53 des Bodenteils 23 gebildeten Ventilblocks Drosselstellen auf, die, wie der Schaltung von Fig. 2 entnehmbar ist, bei der gezeigten Ventil-Endstellung über je eine an jedem Anschluss 65 und 67 vorhandene Drosselstelle 79 die Querkanäle 45 und 49 verbinden, wobei der Druckspeicher 71 ebenfalls über die Drosselstellen 79 mit den Querkanälen 45, 49 in Verbindung ist. Diese Ventilstellung entspricht daher dem voll gedrosselten Dämpfungszustand des Federelements 1. Bei dem proportionalen Verhalten des Dämpfungsventils 55 vermindert sich die Stärke der Drosselung bei Bewegung seines Ventilschiebers 81 aus der gezeigten Position, wobei bei Erreichen der anderen Endstellung des Schiebers 81 die ungedrosselte Verbindung zwischen den Querkanälen 45 und 49 und zum Druckspeicher 71 gegeben ist. Für die Versorgung des Federelements 1 mit dem Systemdruck ist ein mit der Ölseite 70 des Druckspeichers 51 verbundener Anschluss 83 vorgesehen. Über den Anschluss 83 versorgende P/T-Verbindungen sind Funktionssteuerungen des Federelements 1 möglich, wie lastabhängige Niveauregelung, Wankstabilisierung oder Federhärte, wobei durch die Dimensionierung des Druckspeichers 71 die Steifigkeit der Dämpfung beeinflussbar ist. Die Rückschlagventile 77 vermeiden die Gefahr einer Kavitation innerhalb des Federelements 1 bei Auftreten eines Minderdrucks im Betrieb, indem sie ein Nachströmen von Fluid aus der Ölseite 70 des Druckspeichers 71 ermöglichen. Um Luftfreiheit im System bei der Befüllung zu gewährleisten, ist an der obersten Stelle des stangenseitigen Arbeitsraums 15 an dem Abschlussteil 25 eine Entlüftungsbohrung 85 mit einer Entlüftungsschraube 87 vorgesehen.

Wie aus den Figuren ersichtlich, ist bei der durch den Ringraum 39 gebildeten inneren Verbindungsleitung keinerlei äußere Verrohrung erforderlich, so dass eine besonders kompakte Bauweise in Form eines im Wesentlichen einheitlichen Baukörpers realisierbar ist. Eine besonders wenig sperrige Form ist bei dem gezeigten Ausführungsbeispiel dadurch erreicht, dass Dämpfungsventil 55 und Druckspeicher 71 in Schrägstellung zueinander und zur Längsachse angeordnet sind, so dass sie, obwohl sie von dem den Ventilkörper bildenden Ansatz 53 gemeinsam ausgehen, sich an die Außenseite des den Außenzylinder bildenden Rohrkörpers 27 anschmiegen.

Wie bereits erwähnt, ist der innere Hohlraum 19 der Kolbenstange 3 für den Eingriff eines Weg-Mess-Systems 21 vorgesehen. Das Messsystem 21 ragt in Form eines stangenartigen Hohlkörpers vom Boden des Bodenteils 23 her so weit in den Hohlraum 19, dass sich der Federungskolben 11 über den gesamten Federweg entlang des stangenartigen Hohlkörpers und innerhalb des durch das Messsystem 21 gebildeten Messbereichs bewegt. Für den stangenartigen Körper des Messsystems 21 ist im Boden des Bodenteils 23 eine Öffnung 89 vorgesehen, die einen durch ein Dichtelement 93 abgedichteten Sitz für den stangenartigen Körper des Messsystems 21 bildet. Außerdem ist im Anbringteil 7 ein seitlicher Zugang 91 für einen elektrischen Anschluss und die Signalübertragung des Messsystems 21 vorgesehen. Wie am deutlichsten die Fig. 2 zeigt, hat die den Sitz für das Ende des Messsystems 21 bildende Öffnung 89 im Bodenteil 23 eine sich vom Arbeitsraum 17 weg konisch verengende Form. Das Ende des Messsystems 21 wird dadurch vom Druck im Arbeitsraum 17 unter Verstärkung der am Dichtelement 93 wirksamen Dichtkraft in den Sitz gedrückt.

Als Messsystem 21 kann ein magnetostriktiv arbeitender Linear-Wegsensor der Serie HLT 1100 vorgesehen sein, wie er von der Firma HYDAC Electronic GmbH, Hauptstr. 27, 66128 Saarbrücken, Deutschland, vertrieben wird. In diesem Fall ist der stangenartige Hohlkörper ein Schutzrohr, in dem ein magnetostriktiver Wellenleiter gespannt ist. Der Kolben 11 ist mit einem permanentmagnetischen Element versehen, das den Positionssensor bildet.

## Patentansprüche

1. Federelement, insbesondere Feder-Dämpfer-Element (1) für die Kabinenfederung von Fahrzeugen, wie mobilen Arbeitsmaschinen, mit einem Federungszylinder (13), an dessen einem Ende ein Bodenteil (23), das eine Lagerstelle (7, 9) bildet, vorgesehen ist und in dem ein Federungskolben (11), dessen Kolbenstange (3) aus dem dem Bodenteil (23) entgegengesetzten Kopfteil (25) des Federungszylinders (13) herausgeführt ist, Arbeitsräume (15, 17) für ein Druckfluid, wie Hydrauliköl, voneinander trennt, wobei die Arbeitsräume (15, 17) über eine Verbindungsleitung (39, 45, 49, 55) miteinander in Fluidverbindung sind, wobei der Federungszylinder (13) zumindest teilweise von einem koaxialen Rohrkörper (27) umgeben ist, dessen Innendurchmesser größer ist als der Außendurchmesser des Federungszylinders (13), so dass zwischen diesem und dem Rohrkörper (27) ein Außenraum (39) gebildet ist, der zumindest einen Abschnitt der Verbindungsleitung (39, 45, 49, 55) bildet, **dadurch gekennzeichnet, dass** in die Verbindungsleitung (39, 45, 49, 55) ein eine veränderliche Drosselstelle (79) bildendes, steuerbares Dämpfungsventil (55) eingefügt ist, dass das Bodenteil (23) mit einem seitlichen Ansatz (53) einen Ventilblock für das Dämpfungsventil (55) bildet und dass der Druckspeicher (71) unmittelbar an den Ventilblock unter Bildung einer internen Verbindung zum Dämpfungsventil (55) angeschlossen ist.

2. Federelement nach Anspruch 1, **dadurch gekennzeichnet, dass** der Rohrkörper (27) den Federungszylinder (13) in Form eines Außenzylinders derart umgibt, dass ein sich über die Länge des Federungszylinders (13) erstreckender Ringraum (39) als Abschnitt der Verbindungsleitung (39, 45, 49, 55) gebildet ist.

3. Federelement nach einem der vorstehenden Ansprüche, **dadurch gekennzeichnet, dass** der einen innenseitigen Abschnitt der Verbindungsleitung (39, 45, 49, 55) bildende Außenraum (39) als Ringraum an dem von dem Bodenteil (23) entfernten Ende des Federungszylinders (13) in den stangenseitigen Arbeitsraum (15) einmündet und an seinem am Bodenteil (23) gelegenen Ende mit dem Dämpfungsventil (55) in Verbindung ist.

4. Federelement nach einem der vorstehenden Ansprüche, **dadurch gekennzeichnet, dass** der kolbenseitige Arbeitsraum (17) des Federungszylinders (13) an seinem am Bodenteil (23) befindlichen Ende mit dem Dämpfungsventil (55) in Verbindung ist.

5. Federelement nach einem der vorstehenden Ansprüche, **dadurch gekennzeichnet, dass** mindestens ein mit den Arbeitsräumen (15, 17) in Verbindung stehender oder in Verbindung bringbarer hydropneumatischer Druckspeicher (71) vorgesehen ist.

6. Federelement nach einem der vorstehenden Ansprüche, **dadurch gekennzeichnet, dass** die mit den Arbeitsräumen (15, 17) in Verbindung stehende Ölseite (70) des jeweiligen Druckspeichers (71) mit dem Hydrauliksystem (83) eines zugehörigen Fahrzeugs verbindbar ist.

7. Federelement nach einem der vorstehenden Ansprüche, **dadurch gekennzeichnet, dass** als Dämpfungsventil (55) ein proportionales 3/2-Wegeventil (55) vorgesehen ist.

8. Federelement nach einem der vorstehenden Ansprüche, **dadurch gekennzeichnet, dass** zwischen Ölseite (70) des jeweiligen Druckspeichers (71) und dem stangenseitigen (15) und dem kolbenseitigen Arbeitsraum (17) je ein das Dämpfungsventil (55) umgehende Leitung (73, 75) vorgesehen ist, die jede ein Rückschlagventil (77) enthalten, die in Richtung auf den jeweiligen Arbeitsraum (15, 17) öffnen.

9. Federelement nach einem der vorstehenden Ansprüche, **dadurch gekennzeichnet, dass** ein die Axialposition der Kolbenstange (3) im Federungszylinder (13) erkennendes Weg-Mess-System (21) vorgesehen ist.

## Claims

1. Spring element, in particular spring-damper element (1) for the cab suspension of vehicles, such as mobile machines, with a suspension cylinder (13), at the one end of which a base part (23) forming a bearing surface (7, 9), is provided and in which a suspension piston (11), the piston rod (3) of which is guided out of the head part (25) of the suspension cylinder (13) which opposes the base part (23), separates working spaces (15, 17) for a pressure fluid, such as hydraulic oil, from each other, wherein the working spaces (15, 17) are in fluid communication with each other via connecting pipe (39, 45, 49, 55), wherein the suspension cylinder (13) is at least partially surrounded by a coaxial pipe body (27), the internal diameter of which is greater than the external diameter of the suspension cylinder (13), such that an external space (39) is formed between said suspension cylinder and the pipe body (27), said external space forming at least a portion of the connecting pipe (39, 45, 49, 55), **characterised in that** a controllable damping valve (55), forming a variable throttling point (79), is inserted in the connecting pipe (39, 45, 49, 55), that the base part (23) with a lateral attachment (53) forms a valve block for the damping valve (55) and that the pressure accumulator (71) is attached directly to the valve block forming an internal connection to the damping valve (55).

2. Spring element according to claim 1, **characterised in that** the pipe body (27) surrounds the suspension cylinder (13) in the form of an outer cylinder in such a manner that an annular space (39), extending over the length of the suspension cylinder (13), is formed as a portion of the connecting pipe (39, 45, 49, 55).

3. Spring element according to one of the preceding claims, **characterised in that** the external space (39) forming an inside portion of the connecting pipe (39, 45, 49, 55) opens into the rod-side working space (15) as an annular space at the end of the suspension cylinder (13) which is remote from the base part (23) and is connected at its end situated on the base part (23) to the damping valve (55).

4. Spring element according to one of the preceding claims, **characterised in that** the piston-side working space (17) of the suspension cylinder (13) is connected at its end located on the base part (23) to the damping valve (55).

5. Spring element according to one of the preceding claims, **characterised in that** at least one hydro-pneumatic pressure accumulator (71), which is connected to the working spaces (15, 17) or can be connected thereto, is provided.

6. Spring element according to one of the preceding claims, **characterised in that** the oil side (70) of the respective pressure accumulator (71) connected to the working spaces (15, 17) can be connected to the hydraulic system (83) of an associated vehicle.

7. Spring element according to one of the preceding claims, **characterised in that** a proportional 3/2-way valve (55) is provided as the damping valve (55).

8. Spring element according to one of the preceding claims, **characterised in that** one pipe (73, 75) bypassing the damping valve (55) is provided in each case between the oil side (70) of the respective pressure accumulator (71) and the rod-side (15) and the piston-side working space (17), each of which lines contains a non-return valve (77), said valves opening in the direction of the respective working space (15, 17).

9. Spring element according to one of the preceding claims, **characterised in that** a displacement measuring system (21), which detects the axial position of the piston rod (3) in the suspension cylinder (13), is provided.

## Revendications

1. Elément de ressort, notamment élément (1) de ressort-amortisseur pour la suspension de cabine de véhicules, comme des machines mobiles, produisant du travail, comprenant un cylindre (13) de suspension à l'une des extrémités duquel est prévue une partie (23) de fond, qui forme un point (7, 9) de palier, et dans lequel un piston (11) de suspension, dont la tige (3) de piston est sortie de la partie (25) de tête, opposée à la partie (23) de fond, du cylindre (13) de suspension, sépare l'un de l'autre des espaces (15, 17) de travail pour un fluide sous pression, comme de l'huile hydraulique, les espaces (15, 17) de travail communiquant fluidiquement entre eux par un conduit (39, 45, 49, 55) de liaison, le cylindre (13) de suspension étant entouré, au moins en partie, d'un corps (27) tubulaire coaxial, dont le diamètre intérieur est plus grand que le diamètre extérieur du cylindre (13) de suspension, de manière à former, entre celui-ci et le corps (27) tubulaire, un espace (39) extérieur, qui forme au moins une partie du conduit (39, 45, 49, 55) de liaison, **caractérisé en ce que**, dans le conduit (39, 45, 49, 55) de liaison est insérée une soupape (55) d'amortissement, qui peut être commandée et qui forme un point (79) d'étranglement variable, **en ce que** la partie (23) de fond forme, par un prolongement (53) latéral, un bloc de soupape pour la soupape (55) d'amortissement et **en ce que** l'accumulateur (71) de pression est raccordé directement au bloc de soupape, en formant une liaison interne avec la soupape (55) d'amortissement.

2. Elément de ressort suivant la revendication 1, **caractérisé en ce que** le corps (27) tubulaire entoure le cylindre (13) de suspension, sous la forme d'un cylindre extérieur, de manière à former, comme partie du conduit (39, 45, 49, 55) de liaison, un espace (39) annulaire s'étendant sur la longueur du cylindre (13) de suspension.

3. Elément de ressort suivant l'une des revendications précédentes, **caractérisé en ce que** l'espace (39) extérieur, formant la partie du côté intérieur du conduit (39, 45, 49, 55) de liaison, débouche, sous la forme d'un espace annulaire, à l'extrémité loin de la partie (23) de fond du cylindre (13) de suspension, dans l'espace (15) de travail du côté de la tige et communique, à son extrémité tournée vers la partie (23) de fond, avec la soupape (55) d'amortissement.

4. Elément de ressort suivant l'une des revendications précédentes, **caractérisé en ce que** l'espace (17) de travail, du côté du piston du cylindre (13) de suspension, communique, à son extrémité se trouvant à la partie (23) de fond, avec la soupape (55) d'amortissement.

5. Elément de ressort suivant l'une des revendications précédentes, **caractérisé en ce qu'**il est prévu au moins un accumulateur (71) de pression hydropneumatique en communication avec les espaces (15, 17) de travail ou pouvant l'être.

6. Elément de ressort suivant l'une des revendications précédentes, **caractérisé en ce que** le côté (70) huile, en communication avec les espaces (15, 17) de travail de l'accumulateur (71) de pression respectif, peut communiquer avec le système (83) hydraulique d'un véhicule associé.

7. Elément de ressort suivant l'une des revendications précédentes, **caractérisé en ce qu'**il est prévue, comme soupape (55) d'amortissement, une soupape (55) à 3/2 voies proportionnelle.

8. Elément de ressort suivant l'une des revendications précédentes, **caractérisé en ce qu'**il est prévu, entre le côté (70) huile de l'accumulateur (71) de pression respectif et l'espace (15) de travail du côté de la tige et l'espace (17) de travail du côté du piston, respectivement, un conduit (73, 75), qui contournent la soupape (55) d'amortissement et qui contiennent chacun un clapet (77) anti-retour, qui s'ouvre dans la direction allant vers l'espace (15, 17) de travail respectif.

9. Elément de ressort suivant l'une des revendications précédentes, **caractérisé en ce qu'**il est prévu un système (21) de mesure de trajet détectant la position axiale de la tige (3) du piston dans le cylindre (13) de suspension.
